(19) Europäisches Patentamt / European Patent Office / Office européen des brevets

(11) **EP 3 004 823 B1**

(12) **FASCICULE DE BREVET EUROPEEN**

(45) Date de publication et mention de la délivrance du brevet:
**05.12.2018 Bulletin 2018/49**

(51) Int Cl.:
***G01K 1/16*** *(2006.01)*

(21) Numéro de dépôt: **14733246.4**

(22) Date de dépôt: **03.06.2014**

(86) Numéro de dépôt international:
**PCT/FR2014/051318**

(87) Numéro de publication internationale:
**WO 2014/195630 (11.12.2014 Gazette 2014/50)**

(54) **CAPTEUR DE TEMPERATURE**

TEMPERATURSENSOR

TEMPERATURE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.06.2013 FR 1355082**

(43) Date de publication de la demande:
**13.04.2016 Bulletin 2016/15**

(73) Titulaire: **Commissariat à l'Énergie Atomique et aux Énergies Alternatives**
**75015 Paris (FR)**

(72) Inventeurs:
• **ALIANE, Abdelkader**
**38100 Grenoble (FR)**
• **BENWADIH, Mohammed**
**94500 Champigny-sur-Marne (FR)**

(74) Mandataire: **Cabinet Beaumont**
**4, Place Robert Schuman**
**B.P. 1529**
**38025 Grenoble Cedex 1 (FR)**

(56) Documents cités:
EP-A1- 2 506 269          GB-A- 2 200 246
US-A1- 2010 319 436

## Description

La présente demande de brevet revendique la priorité de la demande de brevet français FR13/55082 qui sera considérée comme faisant partie intégrante de la présente description.

Domaine

La présente demande concerne le domaine des capteurs de température ou de pression à pâte résistive.

Exposé de l'art antérieur

On a proposé d'utiliser des capteurs de température sur substrat flexible à bas coût. Ces capteurs sont utilisés pour mesurer la température d'un objet ou autre avec un maximum de sensibilité et de précision.

La demande de brevet US 2005/0232334 propose d'utiliser des pâtes résistives thermosensibles à coefficient de température positif, généralement désigné par le sigle PTC (de l'anglais Positive Temperature Coefficient), ou à coefficient de température négatif, généralement désigné par le sigle NTC (de l'anglais Negative Temperature Coefficient), sur une carte de circuit imprimé ou sur un substrat flexible. Dans une résistance PTC, la valeur de la résistance électrique augmente quand la température augmente. Dans une résistance NTC, la valeur de la résistance électrique diminue quand la température augmente. D'autres exemples de capteur sont décrits dans EP 2 506 269 A1, GB 2 200 246 A et US2010/319436 A1.

Pour certaines applications, il peut être souhaitable d'utiliser comme substrat flexible un substrat de type polyéthylène naphtalate (PEN) ou le polyéthylène téréphtalate (PET).

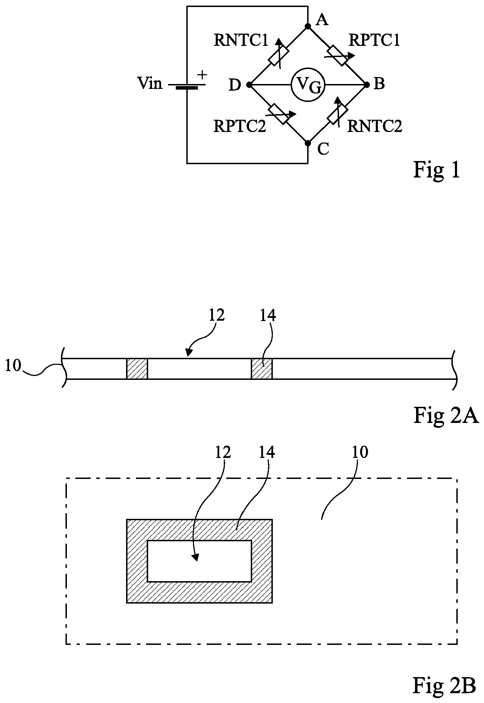

Pour obtenir une bonne précision de mesure, on utilise couramment des montages en pont de Wheatstone tels que celui illustré en figure 1. Ce montage comprend, entre des bornes A et C recevant une tension Vin, une première branche, comprenant une résistance RNTC1 à coefficient de température négatif et une résistance RPTC2 à coefficient de température positif, et une deuxième branche, en parallèle sur la première branche, comprenant en série une résistance RPTC1 à coefficient de température positif et une résistance RNTC2 à coefficient de température négatif. Les points milieux de chacune des branches, désignés par les références B et D, sont connectés à un dispositif de mesure de tension $V_G$. De façon connue, la tension de sortie $V_G$ mesurée entre les points B et D est donnée par la relation suivante :

$$V_G = V_{in} \cdot \left( \frac{R_{NTC} - R_{PTC}}{R_{PTC} + R_{NTC}} \right)$$

dans le cas où les résistances RPTC1 et RPTC2 ont la même résistance $R_{PTC}$ et dans le cas où RNTC1 et RNTC2 ont la même résistance $R_{NTC}$.

Un tel pont de Wheatstone fournit normalement une mesure très précise de tension et donc de température. Néanmoins, des tests effectués par les inventeurs dans le cas où les résistances sont des résistances formées à partir de pâtes résistives ou matériaux résistifs déposés sur des films souples de type PEN ou PET, tels qu'indiqués précédemment, montrent que les mesures fournissent des valeurs de température moins précises que ce à quoi on pourrait s'attendre. Les inventeurs ont étudié l'origine de ce phénomène et proposent ici des moyens d'y remédier comme cela sera indiqué ci-après.

Résumé

Ainsi, un mode de réalisation prévoit un capteur de température ou de pression à pâte résistive comprenant un film souple d'un matériau cristallin ou semi-cristallin comprenant une première zone entourée d'un premier mur amorphisé; et au moins un premier composant électrique formé sur la première zone.

Selon un mode de réalisation, le premier mur amorphisé traverse complètement le film.

Selon un mode de réalisation, le matériau est le polyéthylène naphtalate ou le polyéthylène téréphtalate.

Selon un mode de réalisation, le premier composant électrique est une première résistance thermosensible.

Selon un mode de réalisation, la première résistance thermosensible est constituée d'une pâte résistive.

Selon un mode de réalisation, le film souple comprend une première cavité distincte de la première zone entourée du premier mur, le capteur comprenant, en outre, une deuxième résistance thermosensible formée dans la première cavité.

Selon un mode de réalisation, le capteur comprend des troisième et quatrième résistances thermosensibles montées en pont de Wheatstone avec les première et deuxième résistances thermosensibles.

Selon un mode de réalisation, le film souple comprend une deuxième zone entourée d'un deuxième mur amorphisé, la troisième résistance thermosensible étant formée sur la deuxième zone.

Selon un mode de réalisation, le film souple comprend une deuxième cavité distincte de la première zone entourée du premier mur et de la deuxième zone entourée du deuxième mur, la quatrième résistance thermosensible étant formée dans la deuxième cavité.

Un mode de réalisation prévoit également un procédé de fabrication d'un capteur de température ou de pression à pâte résistive comme décrit ci dessus, comprenant la fabrication d'un mur amorphisé entourant le film souple d'un matériau cristallin ou semi-cristallin consistant à chauffer brièvement par un laser ou un rayonnement ultraviolet le film souple aux emplacements que l'on souhaite amorphiser.

## Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est un schéma de circuit d'un montage en pont de Wheatstone ;
les figures 2A et 2B sont respectivement une vue en coupe et une vue de dessus d'un film souple tel que proposé ici ;
les figures 3 à 8 illustrent des étapes successives de réalisation de deux résistances formées à partir de pâtes résistives sur un film souple ; et
la figure 9 est une vue de dessus représentant un exemple de réalisation pratique d'un montage en pont de Wheatstone.

## Description détaillée

Par souci de clarté, de mêmes éléments ont été désignés par de mêmes références aux différentes figures et, de plus, les diverses figures ne sont pas tracées à l'échelle. Dans la suite de la description, sauf indication contraire, les termes "sensiblement", "environ" et "de l'ordre de" signifient "à 10 % près". En outre, seuls les éléments utiles à la compréhension de la présente description ont été représentés et sont décrits. En particulier, les traitements des signaux fournis par les capteurs de température sont bien connus de l'homme du métier et ne sont pas décrits davantage.

Dans la suite de la description, on appelle film souple un support ayant une épaisseur de 50 à 200 $\mu$m et présentant un comportement flexible, c'est-à-dire que le support peut, sous l'action d'une force extérieure, se déformer, notamment se plier, sans se casser ou se déchirer. En outre, on entend par matériau cristallin un matériau monocristallin, c'est-à-dire formé d'un seul cristal homogène, d'un seul tenant et sans joint de grain, ou un matériau polycristallin, c'est-à-dire comprenant plusieurs cristaux. De plus, on entend par matériau semi-cristallin un matériau comprenant des zones cristallines et des zones amorphes avec un taux de cristallinité supérieur à 10 %, de préférence supérieur à 20 %.

Des tests effectués par les inventeurs sur une réalisation, dans le domaine de l'électronique imprimée, de pont de Wheatstone à partir de matériaux thermiquement sensibles, notamment des encres ou pâtes résistives PTC et NTC formées sur un film souple de type PEN ou PET ont montré que les résultats obtenus n'étaient pas exactement ceux auxquels on devait s'attendre de façon théorique. Les inventeurs ont analysé ce phénomène et attribuent cette imprécision au fait que, pour que le pont de Wheatstone fournisse des résultats précis en s'affranchissant du bruit, un courant non négligeable de l'ordre du milliampère doit circuler dans les résistances thermosensibles du pont. Il en résulte un échauffement par effet Joule de ces résistances thermosensibles. Selon le cas, les résistances NTC ou les résistances PTC s'échauffent plus que les autres et leurs échauffements affectent les résistances de l'autre type. Cet échauffement croisé provoque un déréglage du pont, et donc des mesures imprécises, pour ne pas dire erronées.

On propose ici de pallier à cet inconvénient.
Les figures 2A et 2B sont une vue en coupe et une vue de dessus d'une portion d'un film souple 10 comprenant une zone 12 sur laquelle on veut former un composant susceptible de s'échauffer. Pour éviter que l'échauffement d'un composant formé dans la zone 12 ne se propage vers des composants formés dans le voisinage, la zone 12 est entourée d'un mur 14 plus isolant thermiquement que le film 10 à son état naturel. En figure 2A, le mur 14 a été illustré comme traversant complètement le film 10. La pénétration du mur 14 dans le film peut n'être que partielle.

Les films de PEN ou de PET ont en fait une nature cristalline. On propose ici de former le mur 14 en rendant amorphe (en amorphisant) la zone du film correspondant au mur 14. Pour cela, la zone correspondant au mur est chauffée au-dessus de la température de transition vitreuse du film souple. Pour un film souple en PEN, la température de transition vitreuse est de l'ordre de 120°C et pour un film souple en PET, la température de transition vitreuse est de l'ordre de 60°C.

Grâce à la présence du mur 14, la chaleur produite par effet Joule dans un composant formé sur ou dans la zone 12 entourée du mur se propage rapidement vers le substrat sur lequel le film souple est apposé et est donc évacuée sans affecter des éléments voisins.

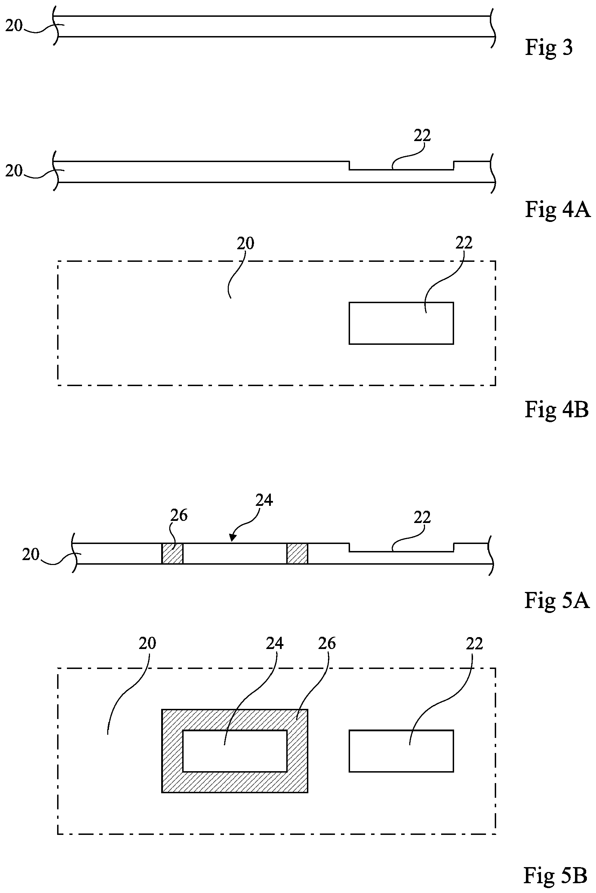

On va maintenant décrire en relation avec les figures 3 à 8 un mode de réalisation de formation d'une résistance à coefficient de température positif et d'une résistance à coefficient de température négatif voisine de la première.

Comme l'illustre la figure 3, on part d'un film souple 20 cristallin ou semi-cristallin. Le film souple 20 est, par exemple, en un polymère plastique. Le film souple peut être en un matériau choisi dans le groupe comprenant le PEN, le PET, le polypropylène (PP), le polystyrène (PS), notamment le polystyrène isotactique, le polycarbonate (PC), le polyimide (PI), le polyétheréthercétone (PEEK) et un mélange de deux ou plus de ces composés. Il s'agit, par exemple, d'un film souple en un polymère, par exemple en PEN ou en PET. A titre de variante, il peut s'agir d'un film souple en polypropylène, polystyrène isotactique ou en polycarbonate. Ce film peut avoir une épaisseur de 50 à 200 $\mu$m, par exemple de l'ordre de 125 $\mu$m.

Comme l'illustrent, en vue en coupe et en vue de dessus, les figures 4A et 4B, on forme ensuite de préférence une cavité 22 dans le film souple 20 à l'emplacement où l'on souhaite former une résistance NTC. Cette cavité 22 peut se faire par tout moyen connu, par exemple, par voie humide ou par une attaque plasma en présence de $O_2$ et de $SF_6$ avec utilisation d'un masque de photolithographie pour définir le motif de la cavité 22, soit encore par abrasion laser. L'épaisseur gravée est par exemple de 5 à 10 $\mu$m. Le but de la cavité 22 qui va par la suite accueillir la pâte résistive sensible NTC (celle qui, couramment, chauffe le moins par effet Joule) est d'améliorer le transfert thermique entre le support du film souple et la pâte résistive NTC.

Comme l'illustrent, en vue en coupe et en vue de dessus, les figures 5A et 5B, l'étape suivante consiste à former un mur 26 entourant une zone 24 sur laquelle on souhaite former par exemple une résistance PTC. Pour cela, la zone à ne pas rendre amorphe est masquée par un masque mécanique ouvert aux emplacements où l'on souhaite réaliser une amorphisation. Cette étape peut être effectuée en utilisant un laser à excimère avec une puissance de l'ordre de 100 watts ou une brève impulsion d'ultraviolet (flash ultraviolet d'une durée de quelques nanosecondes à quelques millisecondes, notamment de 0,5 à 1,5 ms) à l'aide de l'équipement commercialisé sous l'appellation PulseForge par la société Novacentrix ou sous l'appellation Sinteron 2000 par la société Xenon Corporation. Le chauffage peut être réalisé en une seule fois avec un laser excimère mais peut devoir être répété dans le cas où l'on utilise des flashs ultraviolets. Par ces divers moyens, on amène très brièvement la température des zones à amorphiser dans le substrat PEN, PET à une température de l'ordre de 260°C, puis ces zones sont refroidies rapidement afin de les rendre amorphes.

En pratique, on obtient un mur pouvant avoir une largeur de l'ordre de 70 à 200 $\mu$m, une largeur de 100 $\mu$m étant généralement suffisante.

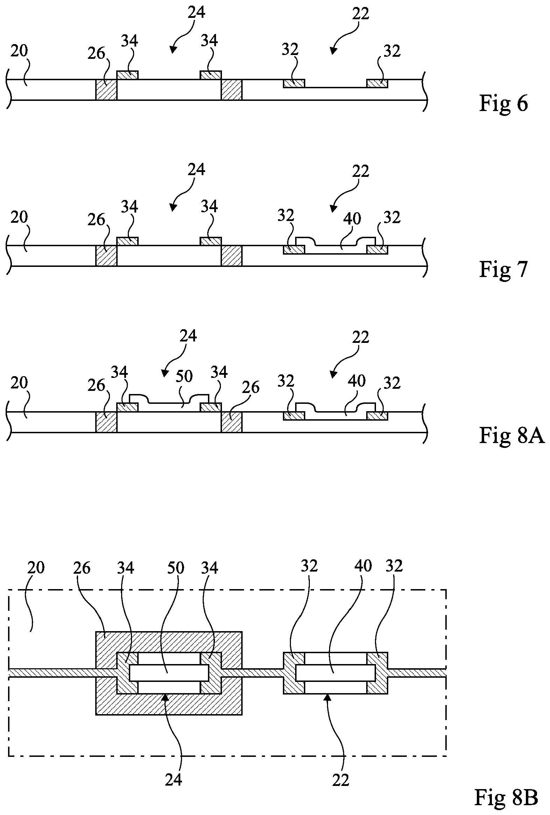

A l'étape suivante dont le résultat est illustré en figure 6, on forme des plots et des pistes métalliques aux emplacements où on veut réaliser des contacts et des connexions. On a représenté à titre d'exemple deux plots 32 dans la zone 22 et deux plots 34 dans la zone 24. Ceci peut être réalisé par dépôt physique en phase vapeur (PVD) puis gravure de métaux tels que Au, Cu, Ag, Ti ... De plus, des électrodes en argent ou en cuivre ou même en polymère conducteur comme du PEDOT:PSS (poly(3,4-éthylènedioxythiophène):poly(styrène sulfonate)) peuvent être déposées par sérigraphie ou par jet d'encre. Cette étape de dépôt et de gravure peut être suivie par un traitement plasma en présence d'oxygène avec un débit de 50 sccm et une puissance de 80 W pendant 60 secondes afin d'améliorer l'adhérence de la pâte résistive thermosensible qui est ensuite déposée. On peut procéder à un traitement en présence d'ultraviolet et/ou d'ozone pendant 3 à 5 minutes.

A l'étape illustrée en figure 7, on a déposé une portion 40 de pâte résistive NTC par sérigraphie à l'intérieur de la cavité 22 avec une épaisseur moyenne de l'ordre de 10 $\mu$m. Les dimensions latérales de la portion 40 sont, par exemple, au minimum de 100 $\mu$m par 200 $\mu$m.

Cette étape est suivie d'un recuit à 130°C pendant 15 à 30 min. La pâte NTC peut être un oxyde métallique comme l'oxyde d'indium-gallium-zinc ou IGZO (Indium Gallium Zinc Oxide) si le dépôt est protégé de la lumière (car l'IGZO est très sensible à la lumière), l'oxyde de zinc ZnO, ou l'oxyde d'étain dopé à l'antimoine $SnO_2$:Sb ou ATO. La pâte NTC peut aussi être de type polymère conducteur organique comme du PEDOT:PSS, ou même du graphène ou une composition de graphène avec un matériau inorganique de type pérovskite comme du $BaTiO_3$ qui augmente très sensiblement le coefficient thermique de la résistance ou TCR (thermal coefficient résistance).

A l'étape illustrée en figure 8A, on a déposé une portion 50 de pâte résistive PTC entre les plots 34 dans la zone 24 protégée par le mur périphérique 26. On peut réaliser un dépôt avec une épaisseur de 10 $\mu$m. Les dimensions latérales de la portion 50 sont, par exemple, au minimum de 100 $\mu$m par 200 $\mu$m. La pâte PTC est, par exemple, à base de noir de carbone dans une matrice en polymère thermoplastique. Cette étape est suivie d'un recuit à 130°C pendant 15 à 30 min.

La figure 8B est une vue de dessus de la structure obtenue dans laquelle de mêmes références que dans les figures précédentes sont utilisées pour désigner les mêmes éléments.

De préférence, après dépôt et traitement des portions 40, 50 de pâte résistive, on procède au dépôt d'une passivation hydrophobe à base d'un polymère fluoré à faible constante diélectrique (de l'ordre de 2 à 3). Ce dépôt est fait par sérigraphie ou par pulvérisation ou même par jet d'encre et est suivi d'un recuit à 100°C pendant 20 à 30 minutes.

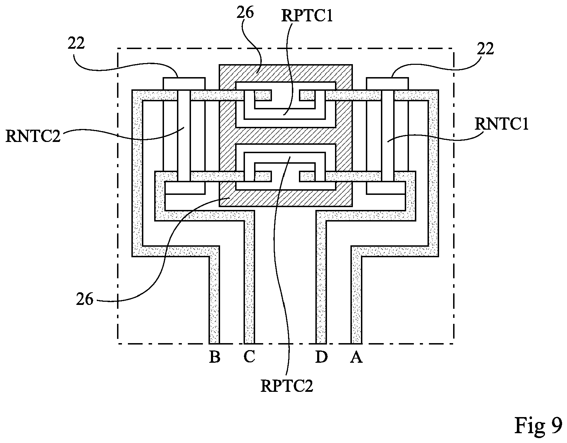

La figure 9 illustre la réalisation d'un montage en pont de Wheatstone comprenant les mêmes éléments que ceux illustrés dans le circuit de la figure 1 et désignés par les mêmes références.

Les bornes A, B, C et D sont reliées aux diverses résistances par des conducteurs métalliques représentés par des régions marquées par des pointillés serrés. Les résistances RPTC1 et RPTC2 sont entourées de murs tels que décrits en relation avec la figure 5A, et désignées collectivement de même par la référence 26. En outre, les résistances RNTC1 et RNTC2 sont réalisées chacune dans une cavité 22 telle que décrit en relation avec la figure 4A.

Dans une réalisation pratique, chacune des zones entourées d'un mur d'isolement avait une surface de l'ordre de 2 x 4 mm$^2$, chacune des résistances NTC avait une longueur de l'ordre de 4,5 mm et une largeur de 500 $\mu$m et le dispositif dans son ensemble avait une surface de l'ordre de 40 mm$^2$. Ce dispositif a permis d'obtenir des sensibilités de l'ordre de 0,07 à 0,09 volt/°C avec une alimentation continue de 5 volts.

Bien entendu, la présente invention est susceptible de nombreuses variantes et modifications qui apparaîtront à l'homme de l'art notamment en ce qui concerne les formes des zones entourées par le mur résistif. Ce mur a toujours été représenté ici comme rectangulaire, mais il peut avoir toute autre forme.

De plus, on note que les exemples de réalisation des diverses étapes du procédé de réalisation n'ont été données qu'à titre d'exemple et que de nombreuses variantes peuvent être adaptées par l'homme de l'art.

Bien que l'on ait essentiellement décrit ici la création de zones thermiquement isolées pour l'isolement thermique entre résistances PTC et NTC pour un capteur de température, ces résistances peuvent être utilisées pour la réalisation d'autres types de composants. En effet, les résistances NTC, notamment à base d'ATO, sont également sensibles à la pression et peuvent être utilisées pour réaliser un capteur de pression.

Bien que l'on ait essentiellement décrit ici la création de zones thermiquement isolées pour l'isolement thermique entre résistances PTC et NTC, l'homme de l'art notera que ces zones peuvent être utilisées pour isoler tout composant susceptible de chauffer des composants voisins.

On note aussi que les exemples donnés ici de pâtes résistives particulières permettent de réaliser des mesures de températures entre 10 et 120°C, mais que d'autres pâtes résistives peuvent être utilisées.

## Revendications

1. Capteur de température ou de pression à pâte résistive comprenant :

   un film souple (20) d'un matériau cristallin ou semi-cristallin comprenant une première zone (24) ; et
   au moins un premier composant électrique (RPTC1, RPTC2) formé sur la première zone, **caractérisé en ce que** la première zone est entourée d'un premier mur amorphisé.

2. Capteur selon la revendication 1, dans lequel le premier mur amorphisé (26) traverse complètement le film.

3. Capteur selon la revendication 1 ou 2, dans lequel le matériau est le polyéthylène naphtalate ou le polyéthylène téréphtalate.

4. Capteur selon l'une quelconque des revendications 1 à 3, dans lequel le premier composant électrique (RPTC1, RPTC2) est une première résistance thermosensible.

5. Capteur selon la revendication 4, dans lequel la première résistance thermosensible (RPTC1, RPTC2, RNTC1, RNTC2) est constituée d'une pâte résistive.

6. Capteur selon la revendication 4 ou 5, dans lequel le film souple (20) comprend une première cavité (22) distincte de la première zone (24) entourée du premier mur (26), le capteur comprenant, en outre, une deuxième résistance thermosensible (RNTC1, RNTC2) formée dans la première cavité.

7. Capteur selon la revendication 6, comprenant des troisième et quatrième résistances thermosensibles (RPTC2, RNTC2) montées en pont de Wheatstone avec les première et deuxième résistances thermosensibles (RPTC1, RNTC1).

8. Capteur selon la revendication 7, dans lequel le film souple (20) comprend une deuxième zone (24) entourée d'un deuxième mur amorphisé (26), la troisième résistance thermosensible (RPTC2) étant formée sur la deuxième zone.

9. Capteur selon la revendication 8, dans lequel le film souple (20) comprend une deuxième cavité (22) distincte de la première zone (24) entourée du premier mur (26) et de la deuxième zone (24) entourée du deuxième mur (26), la quatrième résistance thermosensible (RNTC2) étant formée dans la deuxième cavité.

10. Procédé de fabrication d'un capteur selon l'une quelconque des revendications 1 à 9, comprenant la fabrication du mur amorphisé en chauffant brièvement par un laser ou un rayonnement ultraviolet le film souple (20) aux emplacements que l'on souhaite amorphiser.

## Patentansprüche

1. Temperatur- oder Drucksensor mit resistiver Paste bzw. Widerstandspaste, der Folgendes aufweist:

   einen flexiblen Film (20) aus einem kristallinen oder semikristallinen Material, der einen ersten Bereich (24) aufweist, und
   zumindest eine erste elektrische Komponente (RPTC1, RPTC2), die in dem ersten Bereich geformt ist, **dadurch gekennzeichnet, dass** der erste Bereich mit einer ersten amorphisierten Wand umgeben ist.

2. Sensor nach Anspruch 1, wobei die erste amorphisierte Wand (26) sich über den gesamten Film erstreckt.

3. Sensor nach Anspruch 1 oder 2, wobei das Material Polyethylennaphtalat oder Polyethylenterephtalat ist.

4. Sensor nach einem der Ansprüche 1 bis 3, wobei die erste elektrische Komponente (RPTC1, RPTC2) ein erster wärmeempfindlicher Widerstand ist.

5. Sensor nach Anspruch 4, wobei der erste wärmeempfindliche Widerstand (RPTC1, RPTC2, RNTC1, RNTC2) aus einer resistiven Paste bzw. Widerstandspaste gemacht ist.

6. Sensor nach Anspruch 4 oder 5, wobei der flexible Film (20) einen ersten Hohlraum (22) aufweist, der sich von dem ersten Bereich (24) unterscheidet, der von der ersten Wand (26) umgeben ist, wobei der Sensor weiter einen zweiten wärmeempfindlichen Widerstand (RNTC1, RNTC2) aufweist, der in dem ersten Hohlraum geformt ist.

7. Sensor nach Anspruch 6, der dritte und vierte wärmeempfindliche Widerstände (RPTC2, RNTC2) aufweist, die als eine Wheatstone'sche Brücke mit den ersten und zweiten wärmeempfindlichen Widerständen (RPTC1, RNTC1) montiert sind.

8. Sensor nach Anspruch 7, wobei der flexible Film (20) einen zweiten Bereich (24) aufweist, der von einer zweiten amorphisierten Wand (26) umgeben ist, wobei der dritte wärmeempfindliche Widerstand (RPTC2) auf dem zweiten Bereich geformt ist.

9. Sensor nach Anspruch 8, wobei der flexible Film (20) einen zweiten Hohlraum (22) aufweist, der sich von dem ersten Bereich (24), der von der ersten Wand (26) umgeben ist, und von dem zweiten Bereich (24), der von der zweiten Wand (26) umgeben ist, unterscheidet, wobei der vierte wärmeempfindliche Widerstand (RNTC2) in dem zweiten Hohlraum geformt ist.

10. Verfahren zur Herstellung eines Sensors nach einem der Ansprüche 1 bis 9, welches aufweist, eine amorphisierte Wand herzustellen, indem der flexible Film (20) an den Stellen, die amorphisiert werden sollen, kurz mit einem Laser oder mit ultravioletten Strahlen aufgeheizt wird.

## Claims

1. A temperature or pressure resistive paste sensor comprising:

    a flexible film (20) of a crystalline or semicrystalline material comprising a first region (24), and at least one first electric component (RPTC1, RPTC2) formed on the first region, **characterized in that** the first region is surrounded with a first amorphized wall.

2. The sensor of claim 1, wherein the first amorphized wall (26) crosses the entire film.

3. The sensor of claim 1 or 2, wherein the material is polyethylene naphthalate or polyethylene terephthalate.

4. The sensor of any of claims 1 to 3, wherein the first electric component (RPTC1, RPTC2) is a first heat-sensitive resistor.

5. The sensor of claim 4, wherein the first heat-sensitive resistor (RPTC1, RPTC2, RNTC1, RNTC2) is made of a resistive paste.

6. The sensor of claim 4 or 5, wherein the flexible film (20) comprises a first cavity (22) different from the first region (24) surrounded with the first wall (26), the sensor further comprising a second heat-sensitive resistor (RNTC1, RNTC2) formed in the first cavity.

7. The sensor of claim 6, comprising third and fourth heat-sensitive resistors (RPTC2, RNTC2) assembled as a Wheatstone bridge with the first and second heat-sensitive resistors (RPTC1, RNTC1) .

8. The sensor of claim 7, wherein the flexible film (20) comprises a second region (24) surrounded with a second amorphized wall (26), the third heat-sensitive resistor (RPTC2) being formed on the second region.

9. The sensor of claim 8, wherein the flexible film (20) comprises a second cavity (22) different from the first region (24) surrounded with the first wall (26) and from the second region (24) surrounded with the second wall (26), the fourth heat-sensitive resistor (RNTC2) being formed in the second cavity.

10. A method of manufacturing a sensor according to any of claims 1 to 9, comprising the manufacturing of an amorphized wall by briefly heating with a laser or ultraviolet rays the flexible film (20) at the locations which are desired to be amorphized.

Fig 1

Fig 2A

Fig 2B

20

Fig 3

20                                                                    22

Fig 4A

20                                                                    22

Fig 4B

26        24                                          22

20

Fig 5A

20        24    26                          22

Fig 5B

Fig 6

Fig 7

Fig 8A

Fig 8B

Fig 9

**RÉFÉRENCES CITÉES DANS LA DESCRIPTION**

**Documents brevets cités dans la description**

- FR 1355082
- US 20050232334 A
- EP 2506269 A1
- GB 2200246 A
- US 2010319436 A1